# EUROPEAN PATENT SPECIFICATION

(11) **EP 2 332 862 B1**
(45) Date of publication and mention of the grant of the patent: **25.06.2014**
(21) Application number: 10185780.3
(22) Date of filing: 17.08.2006
(51) Int. Cl.: B65G 21/06, B65G 21/10, B65G 15/24, B65G 23/44, B65G 39/12

(54) **Bracket for conveyor-belt tensioning**
Pratze zum Einstellen der Gurtspannung eines Förderers
Equerre pour régler la tension de la bande d'un convoyeur

(30) Priority: 19.08.2005 NO 20053901
(43) Date of publication of application: 15.06.2011
(62) Divisional of application: 06783982.9
(73) Proprietor: Bugge, Niels, 3142 Vestskogen (NO)
(72) Inventor: Bugge, Niels, 3142 Vestskogen (NO)
(74) Representative: Tofting, Arild

(56) References cited:
- US-A- 3 593 591
- US-A- 5 749 659

## Description

### TECHNICAL FIELD

This invention is related to conveyor systems. More specifically, this invention is related to a bracket for releasably and adjustably mounting and holding a band drum axle according to the preamble of claim 1.

Conveyors are used in various types of industries and equipment as a way to transport goods and particulate material. Conveyor bands on conveyors need to be aligned along a longitudinal axis of the conveyor. Each application of a conveyor may need a different length of conveyor or a possibility to easily change the length of the conveyor system to suit the intended application.

### BACKGROUND OF THE INVENTION

Many problems associated with the alignment of conveyor systems have been addressed previously, e.g. in US 6,902,053 B1 the problem of band alignment has been addressed. Anyone requiring to acquire and use such a conveyor system in an efficient manner will look for solutions that enables an easy mounting and alignment. Typically, such conveyor systems are fairly elaborate and it is time consuming to handle a large number of different parts.

In US patent no. 6,427,839 there is disclosed a convertible conveyor bed. The mortise and tendon couplings as well as the notches and rungs are adopted to facilitate frequent cycles of disassembly and reassembly of the conveyor bed for maintenance operations such as hose-down or clean-up.

US 3593591 shows a bracket that can be used to tighten a conveyor band by displacing a drum axle. The bracket is mounted on a pair of screws extending from the conveyor wall in an overlapping configuration of an opening in the conveyor wall. The tightening of the bracket is done by swinging the bracket laterally about the uppermost screw and holding it in this position, against the gravity, until the lowermost screw has been tightened. The screws only serve to hold the bracket in place after the screws have been sufficiently tightened. No tightening of the conveyor takes place during the tightening of the screws. The tightening is depending on the mechanic holding the drum in a sufficiently tight position. If he, during the tightening of the screw, relaxes his grip on the drum, the conveyor band will be slackened. Further, the amount of tightening is depending on the strength of the mechanic. It is therefore a limit on how tight the conveyor band can be made. An over-tightening on the other hand would result in the whole tightening procedure having to be made all over again.

It is an object of the present invention to achieve a simple and reliable tightening of the conveyor band.

### SUMMARY OF THE INVENTION

According to the invention the objective set forth above is achieved by providing a bracket for releasably and adjustably mounting and holding a band drum axle, wherein themounting bracket is adapted to be received in a mounting opening in the conveyor, that the mounting bracket comprises a screw operable to push the band drum axle downwards relative to the mounting bracket, whereby the mounting bracket is displaced upwards within the mounting opening until engagement with the walls of the conveyor surrounding the mounting opening prevents the mounting bracket from being displaced further upwards and the continuous tightening of the screw serves to displace the drum axle downwards and thereby tighten the conveyor band.

Thereby the direction of tightening is the same as the direction the drum is moved by gravity, i.e. downward. Moreover, the tightening screw will positively move the drum axle further downward and thereby tighten the conveyor. There is not much need for strength by the mechanic to tighten the conveyor band quite substantially, since the screw requires little force to be turned, but imposes a great force on the drum axle. It is also much easier to achieve the optimum tightening of the band than with prior art, since the screw can be adjusted very accurately. An over-tightening can be relieved by just turning the screw a fraction in the opposite direction.

In a preferred embodiment of the invention the bracket comprises mounting details for removable insertion of the bracket into the opening of the conveyor system, said mounting details having dimensions smaller than the dimensions of the opening aperture to allow for an amount of movement of the bracket within the opening.

In another preferred embodiment of the invention it comprises a bracket aperture allowing the insertion of the band drum axle into said aperture, the bracket aperture having dimensions larger than the inserted part of the drive mechanism to allow for an amount of movement of the band drum axle within said bracket aperture.

In yet another preferred embodiment of the invention the bracket has a bracket slot adapted to engage a portion of the walls of a conveyor profile element surrounding the opening.

The invention also provides a conveyor system comprising any number of conveyor modules, each module comprising a movable band and a band tightening mechanism comprising a band drum rotatably mounted on an axle, said axle being carried by a conveyor module, wherein each of said band tightening mechanisms further comprises a pair of brackets according to the invention, arranged to hold each end, respectively, of said band drum axle, said pair of brackets thereby providing a tightening mechanism for said band and a and locking mechanism for said drum axle.

In a preferable embodiment of the conveyor system of the invention at least one of the band tightening mechanisms comprises a band drive mechanism integrated as a part of said band tightening drum.

The invention will now be explained in some more detail with reference to the appended drawings:

### BRIEF DESCRIPTION OF THE DRAWINGS

- Figure 1: illustrates an example embodiment of a conveyor system module with mounting brackets according to the invention.
- Figure 2: illustrates a conveyor system module profile element defining a hole for allowing the insertion of the driving mechanism mounting bracket according to the invention.
- Figure 3: illustrates a coupling bracket and a leg mounting bracket mounted as part of a conveyor system module.
- Figure 4: illustrates a detailed view of a leg mounting bracket.
- Figure 5: illustrates a detailed view of a coupling bracket.
- Figure 6: illustrates an example embodiment of a conveyor system module with a conveyor driving mechanism mounting bracket according to the invention.
- Figure 7: illustrates a more detailed view of a driving mechanism mounting bracket according to the invention.
- Figure 8: illustrates guide/leg mounting brackets as mounted onto conveyor system support elements and also carrying a guide system.
- Figure 9: illustrates the two parts of a coupling bracket where a cylindrical rolling pin is arranged to assist the transported items over the area of the adjoining conveyor system modules.
- Figure 10A: illustrates an example embodiment of a conveyor system in which several modules are connected together using coupling brackets, and where the height of the conveyor band is varied.
- Figure 10B: illustrates a detail of the conveyor system shown in Figure 10A.
- Figure 11: illustrates how individual modules in a multi-module conveyor system can be arranged so as to be tilted.

### DETAILED DESCRIPTION OF THE INVENTION

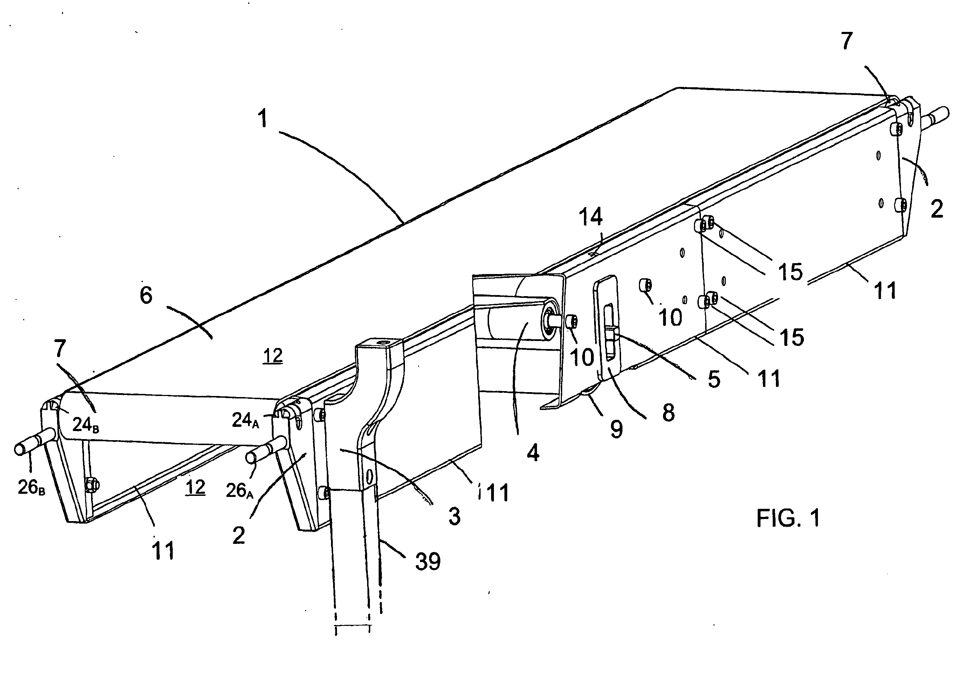

Figure 1 shows one example of a system module 1 of a conveyor system illustrating the present invention. A conveyor system may consist of any number of conveyor system modules 1 coupled together.

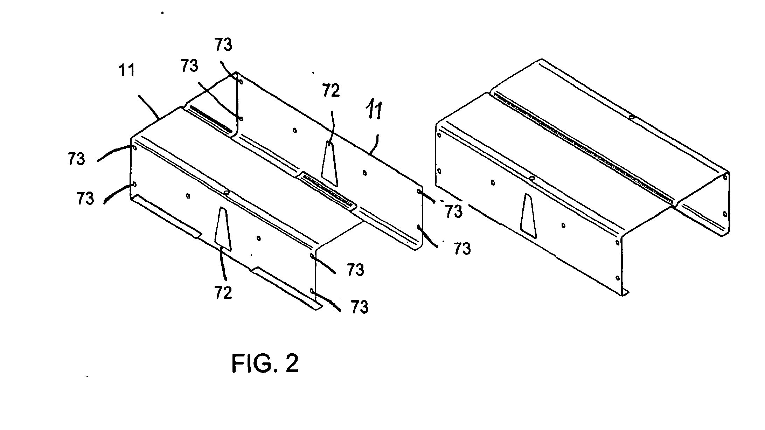

Each conveyor system module is built around one or more profile elements 11. Figure 2 illustrates one example of a profile element 11. Each profile element 11 has a generally U-shaped, flat-bottomed form. In the conveyor system shown in Figure 1, the profile elements 11 are mounted as an upside-down U. The ends of the legs of the U-shape are bent close to a right angle towards each other, so that the two ends are generally directed towards each other. A conveyor system module 1 may comprise a number of profile elements connected in series. The profile elements 11 define a transport volume 12 in which a conveyor band 6 is moving to transport objects 44. The widths of the profile elements 11 define the width of the conveyor system module 1. The outside of the flat-bottomed, U-shaped, profile element 11 defines a sliding surface for a conveyor band 6. A longitudinally directed groove or notch in the profile element 11 may be provided in order that a corresponding longitudinal rib of the conveyor band may follow or be guided by the groove or notch.

The conveyor band 6 in the transport volume 12 will typically be arranged as an endless loop extending between two band-supporting wheel-like structures, preferably cylindrically shaped drums 7, each drum 7 rotatably mounted on a drum axle shaft 50 extending over said transport space between two coupling brackets 2. Each end of each drum axle shaft 50 is detachably arranged in a support 22 of the main body of each respective coupling bracket 2. Each drum axle 50 is mounted so that each shaft extends in a direction substantially transversal to the longitudinal direction of the conveyor band 6, i.e. transversally to the direction of movement of the band 6 when the conveyor is in operation.

A transport band 6 is thus arranged at least partially around at least two band drums 7 in order that the band 6 when moving provides conveyance of objects resting freely upon, is held by, or is attached to the transport band 6.

On Figure 1 the axle shaft receptacle details are defined by a coupling bracket 2 used to join two conveyor system modules together thereby enabling the construction of more complex conveyor systems based on a number of joined conveyor system modules 1.

Each conveyor system module 1 will have a number of leg brackets 3, typically at least four leg brackets, one attached at or near each corner of each conveyor system module 1, possibly also several additional legs attached to each profile element 11.

Figure 1 also illustrates a leg bracket 3 which is attachable to a part of a profile element 11. The coupling bracket 2 also provides correct alignment of two transport conveyor modules 1.

Each of the two opposingly arranged profile units of the conveyor system module 1 is on Figure 1 shown to comprise three profile elements 11 connected in series. One end of a motor axle 5 of a cylinder engine is shown to be placed in a hole in a band drive mounting bracket 8, said band drive mounting bracket 8 being inserted in an insert hole defined by the profile element 11. The other end of the motor axle 5 is mounted in a corresponding facing hole defined by a corresponding facing profile element (not shown). The band drive mounting bracket 11 provides both a means for mounting a band drive mechanism and a means for keeping the band tight during operation.

The details of the coupling bracket 2, the leg bracket 2 and the conveyor drive mechanism bracket 8 and their functions will now be described in more detail.

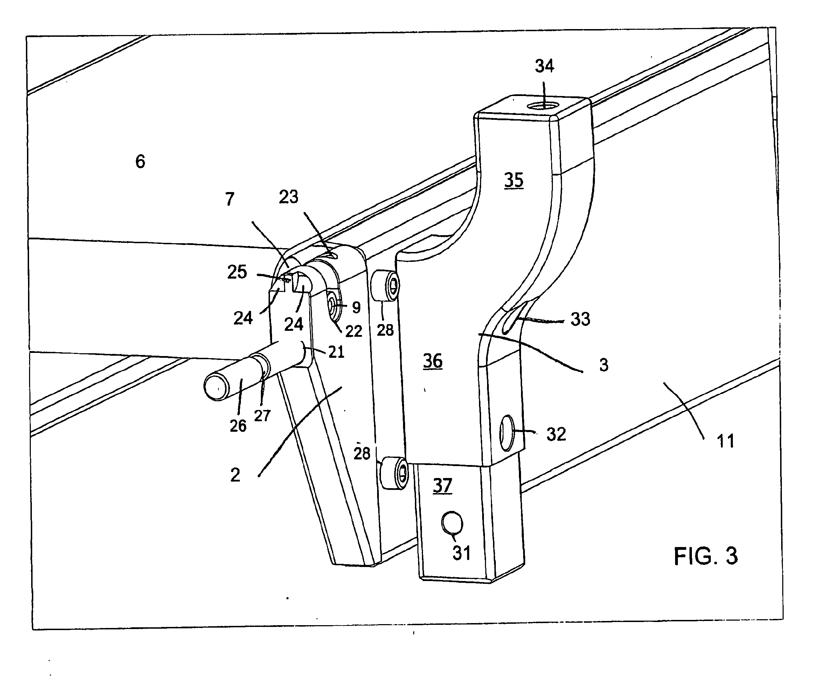

First with reference to Figure 3 there is shown a corner section of a conveyor system module 1 having a coupling bracket. The coupling bracket comprises a main body 2 and a first set of coupling details 28, 29 for allowing demountable mechanical coupling of the main body 2 as part of a first conveyor system module 1. On the coupling bracket main body 2 there is provided a support 22 for supporting a conveyor band drum 7 for guiding the conveyor band 6 of the first conveyor system module 1. A second set of coupling details 21,26 allows for mechanical coupling of the conveyor system module 1 to a similar second conveyor system module having a similar coupling bracket. For simplicity the second conveyor system module is not illustrated on Figure 1.

The second coupling details 21,26 may be a joining pin 26 inserted in a hole 21 defined by the coupling bracket 26. The joining pin 26 is so long as to fill the hole 21 defined by the coupling bracket 26 while a free end extends some distance away from the bracket, so as to be able to be inserted in a corresponding coupling bracket of another conveyor system module. The joining pin 26 will then ensure correct positioning of two coupling brackets with respect to each other when they are brought together. Further, the joining pin 26 may be bent in order to allow an angle between two conveyor system modules being joined. A similar joining pin 26 will typically be used with another pair of coupling brackets on the other corner of the conveyor system module 1. The hole 21 defined by the coupling bracket 2 extends so far into the coupling bracket 2 as to reach the hole 23 into which a tightening screw will be arranged. If a part of the hole 23 is internally threaded a tightening screw may be screwed in so that the end of the screw exerts pressure on the joining pin 26. If the joining pin 26 has been inserted correctly into the hole 21, the tightening screw will contact the joining pin 26 at a groove 27 of the joining pin 26, whereby tightening ensures that the joining pin 26 remains in a defined correct position.

The first coupling details 28, 29 are provided as follows. Typically, the main body 2 of the coupling bracket is provided with threaded holes. The coupling bracket is arranged with the threaded holes 29 placed adjoining openings in the profile element 11. Threaded screw 28 may be inserted through the holes in the profile element, into the threaded holes of the main body 2 of the coupling bracket, and then tightened. The threaded screws 28 will be inserted through corresponding holes in the profile elements 11 and then into the threaded holes 29 in the coupling bracket 2. The coupling bracket is designed in such a way that one of its surfaces can be arranged to adjoin a surface of the profile element 11. The first coupling details 29, e.g. threaded holes, in the coupling bracket are designed so as to connect the coupling bracket to a conveyor profile element 11, by, screwing screws through corresponding holes 73 (se Figure 2) in the profile element 11 and into threaded holes 29 on the coupling bracket 2.

In other words, a bracket arrangement for coupling two conveyor system modules of a conveyor system is provided wherein a first and second coupling brackets forms a first pair of brackets 90_{A} which are attachable to a first conveyor system module and which have first support means 22_{A} for supporting a first band drum 7_{A}. The first band drum 7_{A} is part of a band path of the first conveyor system module. Third and fourth coupling brackets 90_{B} forms a second pair of brackets attachable to a second conveyor system module, and which has second support means 22_{B} for supporting a second band drum 7_{B}, the second band drum being part of a band path of the second conveyor system module. First bracket coupling means 26_{A} mechanically couples the first and the third bracket. Second bracket coupling means for 26_{B} mechanically couples the second and fourth bracket. The first and second coupling means 26_{A},26_{B} effectively couples said first and second conveyor system modules, thus forming a modularized conveyor system.

The coupling bracket 2 also has the function of holding a drum axle 9 of a band drum 7. This is achieved by designing a depression 22 in the coupling bracket 2 which has sufficient depth and right form in order to allow an end of the drum axle 9 to be placed into the depression 22. The other end of the drum axle will typically be placed in a corresponding depression in a coupling bracket at another corner of the conveyor system module 1. On the drum axle 9 there is arranged a band drum 7 which is free to rotate around the axle 9 and which provides the band with freedom to move as a conveyor.

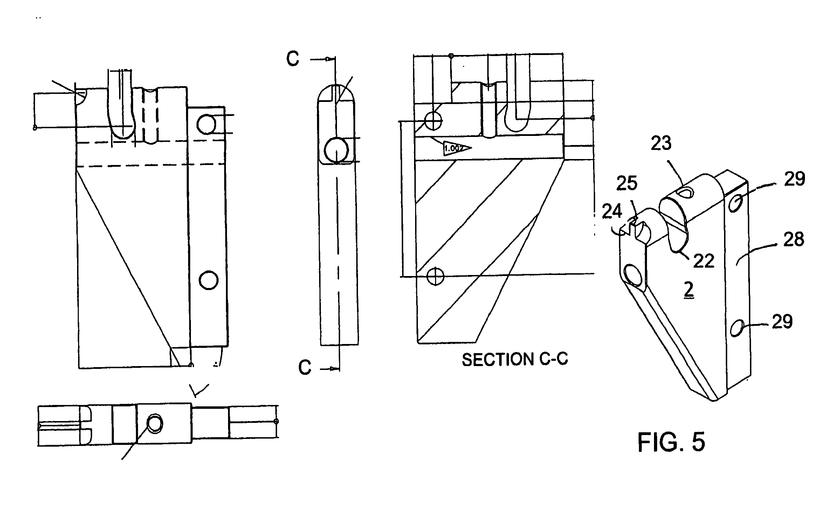

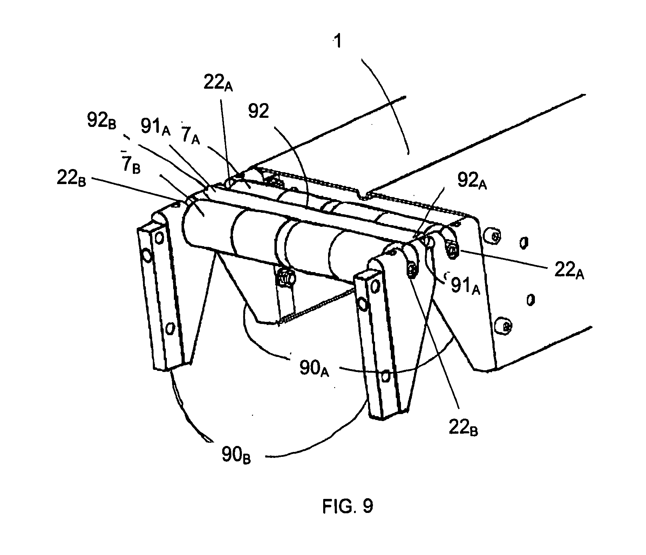

On the surface of the coupling bracket there is a pair of recesses 24, separated by a ridge 25. The recesses 24 have the shape of a sector of a cylinder. The pair of recesses is symmetrically arranged on the corners of the coupling bracket in order that the coupling bracket may be used on either corner of the conveyor system module. When the coupling brackets 2 of two adjoining conveyor system modules are brought together as illustrated in the bracket arrangement of Figure 9 (only one conveyor system module shown), the recesses 24 of a first pair of coupling brackets 90_{A} of adjoining coupling brackets may be designed in such a way that when mounted adjacent to a similar second pair of coupling brackets 90_{B}, a two cylindrical depressions 91_{A},91_{B} are formed, defining resting surfaces onto which the ends of a cylindrical pin 92 may be placed, the cylindrical pin being of sufficient length to extend the distance between the two depressions 91_{A}, 91_{B}. The coupling bracket is also illustrated alone on Figure 5.

The cylindrical pin 92 arranged as described almost closes the gap between the drums 7_{A},7_{B}. This gives two significant benefits. First of all a the objects 44 to be conveyed have a much easier transition form one conveyor system module to another. Further, the cylindrical pin 92 helps preventing objects form falling into the gap between two conveyor system modules.

Preferably, the cylindrical pin 92 is arranged between and parallel with the first band drum 7_{A} associated with a first conveyor system module and a second band drum 7_{B} associated with a second conveyor system module. Further, the a first end 92_{A} of said cylindrical pin 92 is arranged in a first recess 24A whose interior surface is shaped as a segment of a cylinder defined by the first and third brackets, and a second end 92_{B} of the cylindrical pin 92 is arranged in a second recess 24_{B} defined by the second and fourth brackets. The pin 92 is preferably also arranged at a position so as to form an auxiliary support surface for an object being transported on the conveyor bands while the object is in transfer or transition from a first conveyor system module to a second conveyor system module. The cylindrical pin 92 has a standard diameter and said recesses 24 may be designed to allocate a pin of such standard diameter.

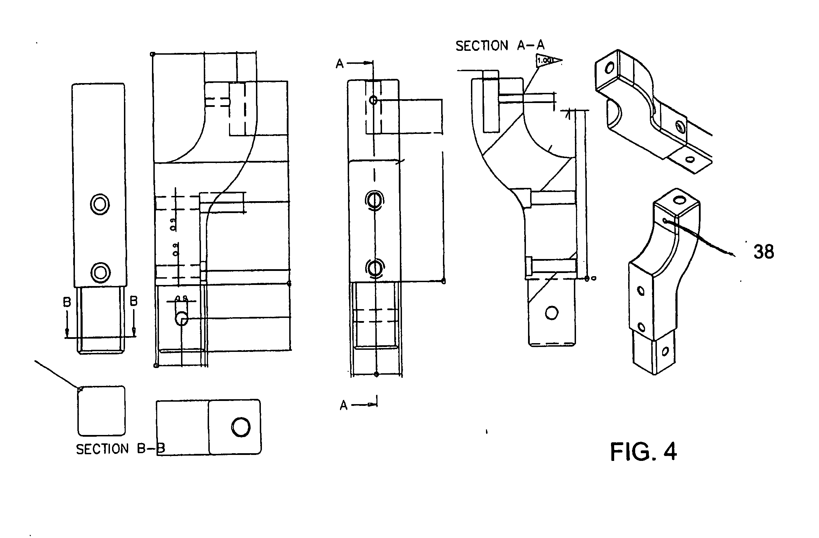

There is provided a combined leg/guide bracket 3 arranged as a part of a conveyor system module 1 and as illustrated on Figure 3. The combined leg/guide bracket 3 is illustrated separately on Figure 4. In the conveyor system the leg/guide bracket 3 is attachable to the profile element 11 using for example threaded screws going through holes 32, 33 in the leg/guide bracket 3 and into internally threaded holes in the profile element 11.

The leg/guide bracket provides for the mounting of various parts of a conveyor system, and it comprises a mounting bracket main body 3 having attachment details 32,33 for attaching the bracket main body 3 as part of a conveyor system 1. Mounting details 31 allows for mounting of the main bracket body 3 onto a conveyor system support element 39. The conveyor support element 39 may for example be a conveyor support leg or conveyor support frame. Support details 34 allows for supporting a conveyor system guiding arrangement 41, 42.

The leg/guide bracket 3 has a generally elongated half-Y-like form and a square cross section. At a first end 36 the half-Y shaped bracket 3 extends into a leg mounting end of somewhat lower cross-section onto which, a leg having a square cross section and open interior at one end can be thread onto the bracket 3 and fastened, for example using a screw entering a first bracket hole 31. The leg/guide bracket is aligned with a surface portion of the profile element 11. At a second end 35 the leg/guide bracket 3 extends to a position which will be next to the objects transported on the band when this is in operation. At his second end 35 the leg/guide bracket bends away from the profile element 11 in order to allow a larger free space for objects being transported on the band 6.

The support details 34,35 comprises the second end 35 of the leg/guide bracket 3 and cylindrical guide system holes 34 provided in the said second end 35 for mounting a guide system pin, preferably in a substantially vertical direction. As several leg/guide brackets 3 are mounted along the conveyor system modules 1, a series of vertically mounted guide pins may be interconnected by one or more generally horizontal pins in order to define guides for the objects transported on the conveyor and prevent the objects from falling off the band when the conveyor is in operation. In the leg bracket there is also provided a hole 38 for inserting a tightening screw for a guiding pin. The hole 38 extends into the guiding pin hole 34 in order that a tightening screw may contact a guiding pin which has been inserted into the guiding pin hole 34.

Because the leg/guide elements at one end bend way from the profile elements 11 to which they are attached pin arrangement mounted onto the end of the leg/guide brackets may allow objects having dimensions slightly or somewhat larger than the width of the band to be transported on a conveyor system built from conveyor system modules.

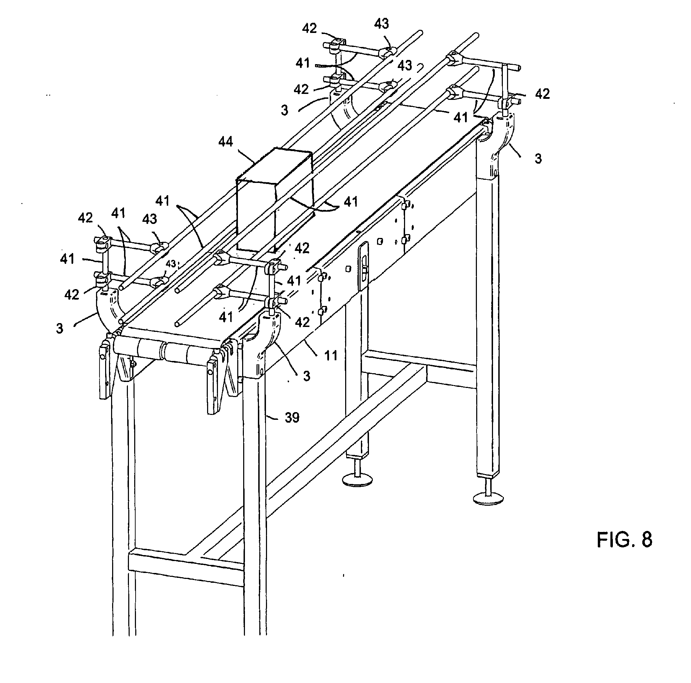

On Figure 8 there is illustrated how four combined leg/guide brackets 3 are mounted onto conveyor system support elements 39. The leg/guide brackets 3 have a lower end 37 generally smaller cross section than the middle part 36, in order that a conveyor system support elements 39 being open in at least one end and having a square cross section, preferably of standard 40x40mm square cross section, may be fitted onto the lower end 37 of the support structure 3. Each guide/leg bracket 3 is provided with mounting details 31 for attaching the conveyor support element 39 in a fixed position relative to the leg/guide bracket 3. The mounting detail 31 may be a hole or opening defined in a side wall of the lower end 37 of the leg/guide bracket through which a stopping pin can be inserted via a corresponding hole in the conveyor system support element 39. Alternatively, the mounting detail 31 may be internally threaded in order that a screw inserted through a corresponding hole of the support element 39 may be tightened so as to fix the position of the support element relative to the guide/leg bracket 3.

Onto each leg/guide bracket 3 a guide system pin 41 is mounted, onto which a number of other guide system pins 41 may be interconnected using cross clamps 42 and end clamps 43 to define a guide structure which guides objects 44 to be transported on the conveyor system from falling off the edges of the conveyor band 6. The height, length and arrangement of the guide system defined by the guiding pins 41, cross clamps 42, and end clamps 43 may vary considerably within the physical limitations in order to give the best possible guiding of the objects 44 being conveyed. In one alternative the guide system may be arranged so as to allow object 44 having a width larger than the width of the conveyor band 6 to be transported. This is possible partly because of the shape of leg/guide brackets 3 which makes it possible to mount the guide system some distance away from the edges of the band 6.

According to the invention there is provided is a new arrangement for drive mechanism mounting and band tightening. This is obtained by providing a bracket for releasably and adjustably mounting and holding a conveyor system drive mechanism wherein a main mounting bracket body 8 having locking details 82-86 are operable to lock a driving mechanism 9 to a conveyor system and where the locking details 82,83,84,85,86 are designed to enable tightening a band 6 of the conveyor system. This locking and tightening function will now be explained in more detail.

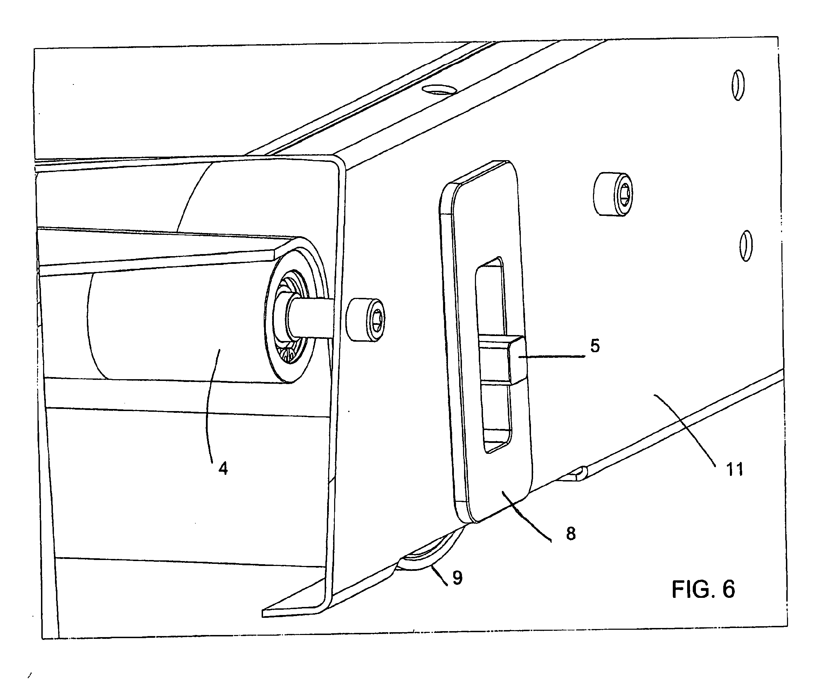

The bracket 8 has the function of mounting the conveyor drive mechanism 9 into a conveyor system module 1. A corresponding mounting opening 72 is provided in the profile element 11. The drive mechanism mounting bracket 8 is illustrated on Figure 6 as mounted on the profile element 11, showing also the axle 5 of the band drive mechanism 9, e.g. in the form of a cylinder engine with an axle 5. The band 6 may be arranged so at to be in contact with an outer surface of the cylinder engine 9, whereby the engine upon running drives the band around its loop and provides the required conveyance of the objects 44.

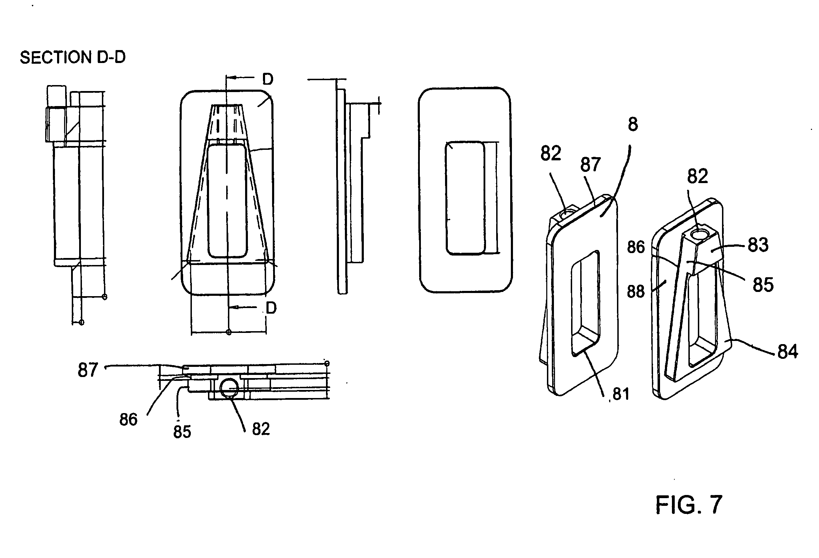

Figure 7 illustrates a mounting bracket 8 for the drive mechanism 9,5 and Figure 2 shows in a transparent view two mounting holes 72 in the profile element 11 for a drive mechanism bracket 8, wherein the drive mechanism mounting brackets 8 are entered. The drive mechanism 9,5 is mounted in the following manner. First, the two ends of an axle 5 of the drive mechanism 9,5 is inserted through two openings 72 in two opposite side walls of the profile element 11. The openings 72 preferably have the form of an isosceles triangle having a section cut off at the angle defined by two sides of equal length. When the conveyor profile element is mounted in its normal position, the openings 72 are oriented with the cut off angle oriented in a generally upwards direction. Similarly, the generally triangularly shaped protrusion of the drive mechanism bracket 9, 5 will have one angle oriented generally in an upward direction when the bracket is mounted in its normal position.

After placing the drive mechanism bracket into the openings 72 on the conveyor profile element 11, the axle 5 of the conveyor drive mechanism will rest in the openings 72. Normally, the conveyor or band drive mechanism 9 will be resting in a hanging portion of the band 6.

The axle 5 can be made of a suitable length to allow this placement to be performed relatively effortlessly. Then the drive mounting bracket 8 is inserted through the bracket mounting openings 72 in the profile element 11.

The bracket 8 has a protruding section 83, 84, 85 which protrudes out from a main body of the bracket 8. The protruding section 83, 84, 85 has a generally triangularly shaped cross section through which an opening 81 in the bracket 8 is defined. The triangular protrusion 83, 84, 85 of the bracket 8 has dimensions small enough so that it may pass into the bracket mounting openings 72. Normally, the triangularly shaped protrusion 83,84,85 will have a form corresponding to or similar to the form of the bracket mounting openings 72, i.e. it may have the shape of an isosceles triangular cross section where an angle of the triangle has been cut off.

The weight of the drive mechanism 9 is resting on the band 6 which is passing over a pair of band drums, a first band drum arranged before the drive mechanism 9 and a second band drum after the drive mechanism 9, as seen in the running direction of the moving band, the drive mechanism 9 "hanging" between the these two band drive mechanisms.

When a threaded screw is inserted into an internally threaded hole 82 defined by the drive mechanism bracket 8 and a screwing/tightening action is performed, an end of the threaded screw will contact the axle 5 of the conveyor drive mechanism 9, where after further tightening of the screw at first will start exerting a downward directed push onto the drive mechanism. A corresponding (opposite) upwardly directed force from the axle 5 will push the tightening screw and the drive mechanism bracket 8 in a generally upwardly direction, whereby slots 86 provided in the drive mechanism bracket 8 engages the side wall portions of the conveyor profile element 11 defining the openings 72. Thus a locking of the bracket 8 to the conveyor profile element 11 is obtained, whereby the bracket will be secured to the conveyor profile element. Further tightening of the tightening screw will increase the downwards pressure on the conveyor drive mechanism 9 and the supporting band 6, whereby a tightening action on the band is achieved. Thus the form and shape of the bracket 8 provides the combined function of holding the conveyor drive mechanism in place and a tightening mechanism for the conveyor band, while maintaining the effective length and height of the conveyor system module.

In the bracket 8 there is provided an opening 82 extending from an outer surface and into the opening 81 in which the axle is placed, said opening having an at least partly threaded inside part. When a threaded screw is screwed into the opening the end of the screw will eventually contact with the axle. If the opening 81 is arranged in vertical fashion from the top of the bracket 8 and into the opening 81, the screw will upon contacting the axle 5 attempt to push the axle and drive mechanism 9 downwards. The band will to some extent prevent a downward movement of the drive mechanism and axle. Rather the band will now generate an upwardly directed equal force which will push the bracket 8 upwards, moving a narrow end of the wedge or triangle shaped part of the bracket towards the narrow end of the opening 72 in the profile element 11. When a threaded screw is tightened an upwards movement of the bracket 8 causes a slot 86 in the bracket 8 to grip around details, for example the edges, of the opening 72 in the profile element, thereby effectively locking the bracket 8 in place as long as the band is tightened by the downwardly pushed drive mechanism 9 via its axle 5. Effectively, the bracket 8 is a self-locking, a self-centering element.

The bracket 8 serves a twofold purpose; it maintains the drive mechanism in place while also providing a tightening function for the band. Access to the tightening screw of the bracket 8 is achieved by providing the profile element 8 with an opening 14 above the head of the tightening screw. In this way the band can be tightened even when the conveyor is in operation.

While the above describes how a pair of mounting bracket 8 holds a band drive mechanism, and is designed to provide both a means for holding the conveyor band tight and a means for holding an axle of a band drive device, it can be envisaged that a pair of mounting brackets 8 is used for holding an axle of a band tightening drum only, and that the band tightening drum does not perform a band drive function.

Height adjustment of single modules or a conveyor system having several modules may be obtained by providing the legs with a height adjustment possibility. Any leg height adjustment known to a person skilled in the art could in principle be used for this purpose.

Preferably, as many parts as possible in the conveyor system are made from a noncorrosive material, such as stainless steel or a similar material. Among the types of material to use in the various parts of the conveyor, two types are particularly useful.

The first type of material is a sufficiently corrosion resistant, non-absorptive rigid material to provide structural integrity, e.g. a food-grade stainless steel. Although this is a preferred material, this is not intended to exclude other materials of similar properties otherwise known to a person skilled in the art.

The other type of material is a low coefficient of sliding friction material, such as e.g. polyethylene, otherwise known as PET, preferably a ultra-high molecular weight (UHWM) polyethylene. PET type HD100 is one alternative, but this is not intended to exclude other materials of similar properties known to a person skilled in the art.

With a conveyor system having the above features, it is possible to provide a conveyor system with modules which are easy to connect, easy to mount and adjust, having a minimum of parts. Similar parts are used for several functions, for example, in this invention the pin being used for the guiding system has the same standard dimension, for example 12 mm diameter pins, is also used for the coupling bracket arrangement.

Combining several functions in single units of the conveyor system thus provides a system with a minimum of parts. For example the combination of leg bracket and guiding bracket in one single unit reduces the number of parts considerably. Also the time to assemble the conveyor system will be significantly reduced.

The arrangement for tightening and driving the conveyor band ensures that the length of the modules is fixed, i.e. conveyor band of each conveyor module can be tightened without altering the length of the module or transport path of the objects.

Further the easy-to-use and simple-to-mount coupling brackets mean that conveyor systems of many different lengths may be provided by connecting together a number of conveyor system modules. In the event of a fault in one conveyor system module, a faulty module may easily be replaced by a correctly functioning module. Thus the system can be easily assembled, downtime due to replacement of faulty parts is reduced, due in part to the ease and speed at which modules and their parts may be assembled and disassembled.

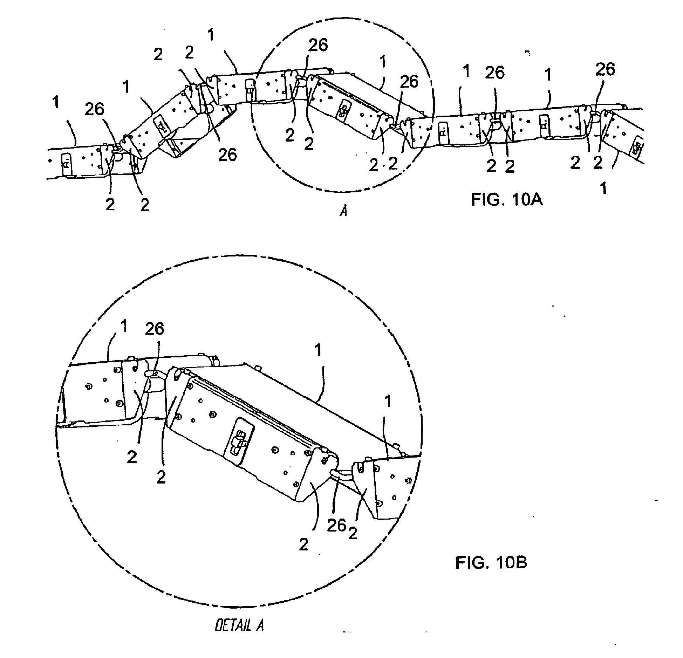

The conveyor system may in addition be arranged so as to vary the height of the conveyor band along the length of a multi-module conveyor system. An example embodiment of this is shown in Figure 10A and the detailed Figure10B. Figures 10A-B illustrates a multiple of individual conveyor modules 1 interconnected by pairs of connection brackets 2. Connecting elements 26, preferably in the form of pins, are used to couple a connection element of a first module 1 with a connection element of a second module 1. Figure 10A-B illustrates how connection pins 26 may not be straight, but can be provided with a bend in a middle portion in order to provide the conveyor system with a change of transport direction at the bend connection pins 26. In this way, a conveyor system may readily provide transport of items between locations at different heights. Further the height of a start-point or end-point of the conveyor system can vary, as the use of connection pins 26 of different bend angles may provide many possible conveyor configurations, and the ease mounting and removing the connection pins 26 makes the conveyor system easy to configure and reconfigure. Further, the conveyor system is to a large extent both scalable and transformable, as it is fairly easy to provide connection pins of different bend angles, thus allowing a large number of conveyor system configurations apart from a linear one.

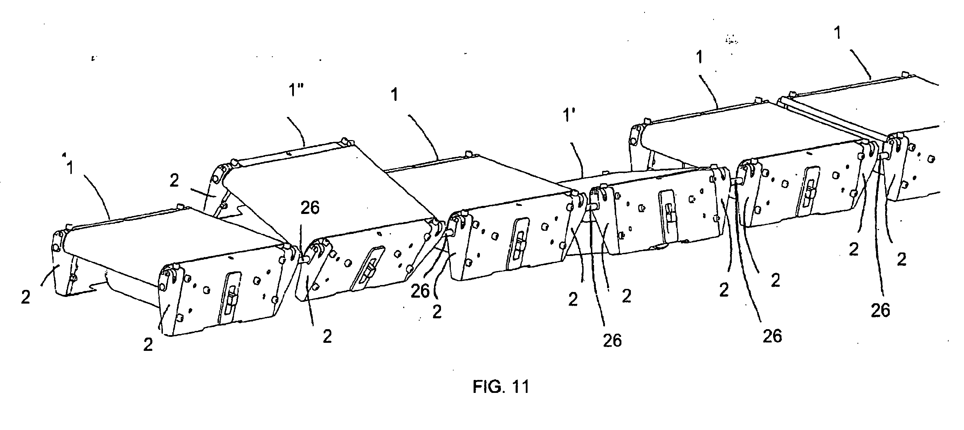

Figure 11 illustrates an even further possible embodiment of a conveyor band, wherein a number of conveyor modules 1,1',1" initially are connected together in a substantially straight line arrangement. Two of the conveyor modules 1', 1" have been disjointed from the neighboring system modules at a first side. Because the conveyor modules are still attached at the other side, they may be tilted about an axis defined by the longitudinal axis of the remaining connection pins 26. In Figure 11 the conveyor module 1' is raised at one end. If the conveyor module 1' is raised sufficiently much, any object resting on the conveyor band of this conveyor module will slide off the conveyor band and into whatever collecting device is arranged next to the conveyor module 1' in question. If for example an item moving along a conveyor system, and is inspected by automatic inspection equipment or by an operator, an identified faulty item may be moved into a "faulty item" bin placed next to the conveyor module 1' being tilted to remove faulty items. Conveyor module 1" illustrates a similar lowering of a conveyor module on one side.

Of course, a combination of the possibilities illustrated in Figures 10 and 11 may easily be provided, as well. Finally, the connection pins 26 at one end of a conveyor system may be replaced by carrying pins (not shown), typically of the same form, but normally somewhat longer than the connection pins 26, in order to enable the pins to hold a table surface or an end basket (not shown) which can be desirable at the end of the conveyor, for example for holding a larger number of items, to be transported or having been transported, by the module conveyor system.

In summary, the present invention provides a new module based conveyor system which can be easily assembled and disassembled with a minimum of tools and operations, while also providing the possibility for reconfiguration, scalability and/or transformability of the system.

## Claims

1. Bracket for releasably and adjustably mounting and holding a band drum axle (5) in a conveyor to tightening a band in the conveyor, **characterized in that** the mounting bracket (8) is adapted to be received in a mounting opening (72) in the conveyor, that the mounting bracket (8) comprises a screw operable to push the band drum axle (5) downwards relative to the mounting bracket (8), whereby the mounting bracket (8) is displaced upwards within the mounting opening (72) until engagement with the walls of the conveyor surrounding the mounting opening (72) prevents the mounting bracket (8) from being displaced further upwards and the continuous tightening of the screw serves to displace the drum axle (5) downwards and thereby tighten the conveyor band.

2. Bracket according to claim 1, comprising mounting details (85) for removable insertion of the bracket (8) into the opening (72) of the conveyor system, said mounting details having dimensions smaller than the dimensions of the opening aperture (72) to allow for an amount of movement of the bracket within the opening (72).

3. Bracket according to claim 1 or 2, comprising a bracket aperture (81) allowing the insertion of the band drum axle (5) into said aperture, the bracket aperture (81) having dimensions larger than the inserted part of the drive mechanism (9) to allow for an amount of movement of the band drum axle within said bracket aperture (81).

4. Bracket according to claim 1, 2 or 3, wherein the bracket has a bracket slot (86) adapted to engage a portion of the walls of a conveyor profile element (11) surrounding the opening (72).

5. Conveyor system comprising any number of conveyor modules (1), each module comprising a movable band (6) and a band tightening mechanism comprising a band drum (9) rotatably mounted on an axle (5), said axle (5) being carried by a conveyor module (1), **characterized in that** each of said band tightening mechanisms further comprises a pair of brackets according to claim 1 arranged to hold each end, respectively, of said band drum axle (5), said pair of brackets (8) thereby providing a tightening mechanism for said band and a and locking mechanism for said drum axle (5).

6. Conveyor system according to claim 5, wherein at least one of the band tightening mechanisms comprises a band drive mechanism integrated as a part of said band tightening drum.

## Patentansprüche

1. Halterung zum lösbaren und einstellbaren Befestigen und Halten einer Bandtrommelachse (5) in einem Förderer, um ein Band im Förderer zu spannen, **dadurch gekennzeichnet, dass** die Befestigungshalterung (8) in einer Befestigungsöffnung (72) im Förderer aufgenommen werden kann, und dass die Befestigungshalterung (8) eine Schraube umfasst, welche betreibbar ist, die Bandtrommelachse (5) bezüglich der Befestigungshalterung (8) nach unten zu drücken, wobei die Befestigungshalterung (8) innerhalb der Befestigungsöffnung (72) nach oben versetzt wird bis ein Eingriff mit den Wänden des Förderers, welche die Befestigungsöffnung (72) umgeben, die Befestigungshalterung (8) daran hindert, weiter nach oben versetzt zu werden und das kontinuierliche Spannen der Schraube dazu dient, die Trommelachse (5) nach unten zu versetzen und dabei das Förderband zu spannen.

2. Halterung nach Anspruch 1, umfassend Befestigungselemente (85) zum entfernbaren Einsetzen der Halterung (8) in die Öffnung (72) des Fördersystems, wobei die Befestigungselemente Abmessungen aufweisen, welche kleiner als die Abmessungen des Öffnungsausschnitts (72) sind, um einen Bewegungsbetrag der Halterung innerhalb der Öffnung (72) zu ermöglichen.

3. Halterung nach Anspruch 1 oder 2, umfassend einen Halterungsausschnitt (81), welcher das Einsetzen der Bandtrommelachse (5) in den Ausschnitt ermöglicht, wobei der Halterungsausschnitt (81) Abmessungen aufweist, welche größer als der eingesetzte Teil der Antriebseinrichtung (9) sind, um einen Bewegungsbetrag der Bandtrommelachse innerhalb des Halterungsausschnitts (81) zu ermöglichen.

4. Halterung nach Anspruch 1, 2 oder 3, wobei die Halterung eine Halterungsvertiefung (86) aufweist, welche in einen Abschnitt der Wände eines Förderprofilelements (11), welche die Öffnung (72) umgeben, eingreifen kann.

5. Fördersystem, umfassend eine beliebige Anzahl von Fördermodulen (1), wobei jedes Modul ein bewegliches Band (6) und eine Bandspanneinrichtung umfasst, welche eine Bandtrommel (9) umfasst, welche rotierbar auf einer Achse (5) befestigt ist, wobei die Achse (5) von einem Fördermodul (1) getragen wird, **dadurch gekennzeichnet, dass** jede Bandspanneinrichtung weiterhin ein Paar von Halterungen nach Anspruch 1 umfasst, welche angeordnet sind, um jedes Ende der Bandtrommelachse (5) entsprechend zu halten, wobei das Paar der Halterungen (8) dabei eine Spanneinrichtung für das Band und ein Arretiereinrichtung für die Trommelachse (5) bereitstellt.

6. Fördersystem nach Anspruch 5, wobei zumindest eine der Bandspanneinrichtungen eine Bandantriebseinrichtung umfasst, welche als Teil der Bandspanntrommel integriert ist.

## Revendications

1. Etrier pour le montage et le support de manière libérable et ajustable d'un essieu de tambour de bande (5) dans un convoyeur de manière à serrer une bande dans le convoyeur, **caractérisé en ce que** l'étrier de montage (8) est adapté pour être reçu dans une ouverture de montage (72) dans le convoyeur, **en ce que** l'étrier de montage (8) comporte une vis pouvant être actionnée pour pousser l'essieu de tambour de bande (5) vers le bas par rapport à l'étrier de montage (8), de sorte que l'étrier de montage (8) est déplacé vers le haut dans l'ouverture de montage (72) jusqu'à ce qu'une mise en prise avec les parois du convoyeur entourant l'ouverture de montage (72) empêche l'étrier de montage (8) d'être déplacé davantage vers le haut, et le serrage continu de la vis sert à déplacer l'essieu de tambour (5) vers le bas, et ainsi à serrer la bande de convoyeur.

2. Etrier selon la revendication 1, comportant des détails de montage (85) pour une insertion amovible de l'étrier (8) dans l'ouverture (72) du système de convoyeur, lesdits détails de montage ayant des dimensions inférieures aux dimensions de l'ouverture (72) pour permettre une quantité de déplacement de l'étrier dans l'ouverture (72).

3. Etrier selon la revendication 1 ou 2, comportant une ouverture d'étrier (81) permettant l'insertion de l'essieu de tambour de bande (5) dans ladite ouverture, l'ouverture d'étrier (81) ayant des dimensions supérieures à la partie insérée du mécanisme d'entraînement (9) pour permettre une quantité de déplacement de l'essieu de tambour de bande dans ladite ouverture d'étrier (81).

4. Etrier selon la revendication 1, 2 ou 3, dans lequel l'étrier a une fente d'étrier (86) adaptée pour venir en prise avec une partie des parois d'un élément de profil de convoyeur (11) entourant l'ouverture (72).

5. Système de convoyeur comportant un nombre quelconque de modules de convoyeur (1), chaque module comportant une bande mobile (6) et un mécanisme de serrage de bande comportant un tambour de bande (9) monté de manière rotative sur un essieu (5), ledit essieu (5) étant porté par un module de convoyeur (1), **caractérisé en ce que** chacun desdits mécanismes de serrage de bande comporte une paire d'étriers selon la revendication 1 agencés pour supporter chaque extrémité, respectivement, dudit essieu de tambour de bande (5), ladite paire d'étriers (8) fournissant ainsi un mécanisme de serrage pour ladite bande, et un mécanisme de verrouillage dudit essieu de tambour (5).

6. Système de convoyeur selon la revendication 5, dans lequel au moins un des mécanismes de serrage de bande comporte un mécanisme d'entraînement de bande intégré sous la forme d'une partie dudit tambour de serrage de bande.
